# EUROPÄISCHE PATENTANMELDUNG

(11) **EP 1 947 568 A1**
(43) Veröffentlichungstag der Anmeldung: **23.07.2008**
(21) Anmeldenummer: 07024784.6
(22) Anmeldetag: 20.12.2007
(51) Int. Cl.: G06F 11/36

(54) **Verfahren zur Beobachtung eines Steuergeräts**

(30) Priorität: 29.12.2006 DE 102006062555
(71) Anmelder: dSPACE digital signal processing and control engineering GmbH, 33100 Paderborn (DE)
(72) Erfinder: Dressler, Marc-Andre, 32805 Horn (DE); Limberg, Hans-Günter, 33098 Paderborn (DE); Rolfsmeier, Andre, 33175 Bad Lipspringe (DE)
(74) Vertreter: Gesthuysen, von Rohr & Eggert

(57) **Zusammenfassung**

Beschrieben und dargestellt ist ein Verfahren zur Beobachtung eines Steuergeräts (1) durch ein Beeinflussungsgerät (2), wobei das Steuergerät (1) wenigstens einen Mikrocontroller (3), wenigstens einen Speicher (4) und wenigstens eine Debug-Schnittstelle (5) umfaßt, der Speicher (4) Adreßinhalte in Adressen innerhalb seines Adreßraums aufweist und die Debug-Schnittstelle (5) mit einer Trace-Funktionalität zur Überwachung von Beobachtungsadressen (8a, 8b, 8c) innerhalb wenigstens eines Trace-Adreßbereichs (10) innerhalb des Adreßraums ausgestattet ist.

Aufgabe der vorliegenden Erfindung ist es, derartige Verfahren zur Beobachtung eines Steuergeräts so auszugestalten, daß die ihnen innewohnenden Nachteile vermieden werden.

Die aufgezeigte Aufgabe ist erfindungsgemäß zunächst und im wesentlichen dadurch gelöst, daß auf dem Steuergerät (1) ein Beobachtungsdienst zur Ausführung mit dem Mikrocontroller (3) eingerichtet wird, daß auf dem Steuergerät (1) wenigstens ein separater Trace-Adreßbereich (10) innerhalb des Adreßraums mit wenigstens einer Adresse (11, Trace-Kanal) bestimmt wird, daß dem Beobachtungsdienst - insbesondere verteilte - Beobachtungsadressen (8a, 8b, 8c) innerhalb des Adreßraums mitgeteilt werden und daß der Beobachtungsdienst die Adreßinhalte - zumindest eines Teils - der Beobachtungsadressen (8a, 8b, 8c) sequentiell in wenigstens eine Adresse (11, Trace-Kanal) des Trace-Adreßbereichs (10) kopiert.

## Beschreibung

Die Erfindung betrifft ein Verfahren zur Beobachtung eines Steuergeräts durch ein Beeinflussungsgerät, wobei das Steuergerät wenigstens einen Mikrocontroller, wenigstens einen Speicher und wenigstens eine Debug-Schnittstelle umfaßt, der Speicher Adreßinhalte in Adressen innerhalb seines Adreßraums aufweist und die Debug-Schnittstelle mit einer Trace-Funktionalität zur Überwachung von Beobachtungsadressen innerhalb wenigstens eines Trace-Adreßbereichs innerhalb des Adreßraums ausgestattet ist.

Verfahren der oben beschriebenen Art sind aus der Praxis bekannt und finden vor allem in der angewandten Forschung und der industriellen Entwicklung überall dort ihren Einsatz, wo Steuergeräte entwickelt, getestet und zum Einsatz gebracht werden sollen.

Unter einem Steuergerät wird im folgenden jegliche Art von elektronischen Geräten verstanden, mit deren Hilfe technisch-physikalische Prozesse beeinflußt werden. Üblicherweise umfaßt ein solches Steuergerät zumindest eine Recheneinheit, zum Beispiel in Form eines Prozessors oder Mikrocontrollers, einen Speicher sowie Eingabe-Ausgabe-Schnittstellen, um Berechnungen in Abhängigkeit von intern gespeicherten Parametern bzw. internen Rechengrößen und/oder von gemessenen - jedenfalls von extern bereitgestellten - Größen durchführen zu können und um gleichermaßen durch Ausgabe von elektrischen Signalen auf externe Vorgänge einwirken zu können. Steuergeräte wirken damit im regelungstechnischen Sinne nicht einfach nur als Steuerungen, sondern sie sind insbesondere auch dazu geeignet, komplexe Regelungsaufgaben zu lösen. Wenn im folgenden von Steuergeräten, Steuerungen und dem Vorgang des Steuerns die Rede ist, sind stets auch Vorrichtungen und Tätigkeiten nach der oben angegebenen allgemeineren Definition umfaßt.

Unter Mikrocontrollern werden im folgenden elektronische Rechnereinheiten mit zugeordnetem elektronischen Speicher verstanden, unabhängig davon, ob der Speicher vollständig oder teilweise in einem Bauteil mit der Rechnereinheit realisiert ist oder ob Rechnereinheit und zugeordneter Speicher als voneinander getrennte Bauteile vorliegen.

Wozu die Beobachtung eines Steuergeräts durch ein Beeinflussungsgerät dient, wird durch die folgende Darstellung des Entwicklungsprozesses deutlich, den Steuergeräte - zumindest im Rahmen umfangreicherer Aufgabenstellungen - in der Praxis durchlaufen.

Am Anfang einer regelungstechnischen Aufgabenstellung steht zunächst die mathematische Modellierung und Simulation eines technisch-physikalischen Prozesses, dem ein wunschgemäßes dynamisches Verhalten aufgeprägt werden soll. Anhand des resultierenden abstrakten mathematischen Modells lassen sich verschiedene Regelungskonzepte, die ebenfalls ausschließlich als mathematische Modellvorstellung vorliegen, im Rahmen numerischer Simulationen erproben; dieser Schritt stellt die Phase der Modellierung und des Reglerentwurfs zumeist auf Basis computergestützter Modellierungswerkzeuge dar.

In einem zweiten Schritt wird der im mathematischen Modell entworfene Regler auf eine echtzeitfähige Simulations-Einheit übertragen, die meist sowohl in ihrer Rechenleistung wie auch hinsichtlich ihrer I/O-Fähigkeiten (Input/Output) ein übliches Serien-Steuergerät bei weitem übertrifft und mit dem echten physikalischen Prozeß wechselwirkend in Verbindung steht. Da die Übertragung des abstrakt formulierten Reglers von einem Modellierungswerkzeug auf die Simulations-Einheit weitestgehend automatisiert erfolgt, wird in der zweiten Phase von Rapid-Control-Prototyping (RCP) oder Funktions-Prototyping gesprochen.

Ist das regelungstechnische Problem mit dem auf der Simulations-Einheit betriebenen Regler gelöst, wird der Reglungsalgorithmus im Rahmen der Steuergeräte-Implementierung - meist voll automatisiert - auf das letztendlich in der Praxis einzusetzende (Serien-) Steuergerät übertragen.

Das nun im realen Prozeß grundsätzlich einsetzbare Steuergerät wird vor seinem Einsatz häufig zunächst einem Test unterzogen, indem der reale Prozeß, mit dem das Steuergerät letztendlich wechselwirken soll, teilweise oder vollständig durch eine echtzeitfähige Simulations-Einheit simuliert und das Steuergerät durch Signal-Testmuster stimuliert wird (Hardware-in-the-Loop-Simulation). Das derart getestete Steuergerät wird letztendlich in den realen Prozeß eingesetzt und mit ihm wechselwirkend betrieben.

Trotz der zuvor durchgeführten umfangreichen Tests ist es meist notwendig, Abstimmungen am Steuergerät bzw. an dem im Steuergerät implementierten Funktionen vorzunehmen. Dazu ist es zum einen notwendig, den Zustand des Steuergeräts, also alle vom Steuergerät ein- bzw. ausgegebenen wie auch intern verwendeten Daten zeitnah beobachten, aufzeichnen und analysieren zu können. Zum anderen ist es notwendig, durch schreibenden Zugriff auf den Speicher des Steuergeräts die den Funktionen/Regelungsalgorithmen zugrundeliegenden Parameter bzw. Parametersätze, also Kennzahlen, -linien oder -felder, verändern zu können. Die beschriebenen Vorgänge werden insgesamt als Steuergeräte-Applikation bezeichnet.

In der DE 10 2004 027 033 A1 werden verschiedene Verfahren zur Beeinflussung und Beobachtung eines Steuergeräts beschrieben wie auch gerätetechnische Voraussetzungen, die die Beobachtung und Beeinflussung eines Steuergeräts durch ein Beeinflussungsgerät erst ermöglichen. Auch wird hier ein Verfahren zur Beobachtung von Steuergeräten beschrieben, die mit Mikrocontrollern ausgestattet sind, die eine Debug-Schnittstelle aufweisen. Derartige Schnittstellen sind teils standardisiert, wie z. B. in dem NEXUS-Standard (IEEE-ISTO 5001: "The NEXUS 5001 Forum Standard for a Global Embedded Processor Debug Interface", 2003).

Debug-Schnittstellen bieten weitreichende Möglichkeiten der Beobachtung und Beeinflussung von Zuständen des Mikrocontrollers des Steuergeräts und sie ermöglichen eine Laufzeitbeobachtung und -kontrolle (Debugging) des Mikrocontrollers, insbesondere also die Verfolgung der Programmcode-Ausführung und der dabei zugegriffenen und veränderten Daten. Dadurch, daß Debug-Schnittstellen integraler Teil der Mikrocontrollerhardware sind, lassen sich mit ihnen deutlich schnellere Zugriffe auf den Mikrocontroller realisieren als es durch eine softwarebasierte Kommunikations-Schnittstelle möglich ist.

In einem bekannten Verfahren zur Beobachtung eines Steuergeräts gemäß der DE 10 204 027 033 A1 wird ein bidirektionaler Kanal der Debug-Schnittstelle verwendet, um von dem Beeinflussungsgerät Daten auf das Steuergerät zu übertragen, und um umgekehrt von dem Steuergerät zu dem Beeinflussungsgerät Daten zu übertragen, die zuvor von dem Beeinflussungsgerät angefordert worden sind; bei diesen Daten handelt es sich um Adreßinhalte in Adressen innerhalb des Adreßraums, den der Speicher des Steuergeräts aufweist. Die Verwendung einer solchen bidirektionalen Schnittstelle zur Beobachtung des Steuergeräts weist den Vorteil auf, daß das Steuergerät selbst keine Kenntnis von den Beobachtungsadressen haben muß, da das Auslesen dieser Beobachtungsadressen stets extern von dem Beeinflussungsgerät unter wiederholter Angabe der Beobachtungsadressen erneut angefordert wird.

Aktuelle Mikrocontroller, die über eine Debug-Schnittstelle verfügen, sind beispielsweise Mikrocontroller aus der Familie MPC 55xx der Freescale Semiconductor Inc. Zur Umsetzung der beschriebenen Funktionalität wird beispielsweise bei Verwendung des MPC 5553 oder des MPC 5554 der JTAG-Port des Prozessors verwendet (JTAG bezeichnet den von der Joint Test Action Group ausgearbeiteten IEEE-Standard 1149,1, der ein Verfahren zum Debugging von elektronischer Hardware beschreibt). Die in der JTAG-Schnittstelle hinterlegte Funktionalität ist zwar gut geeignet zur Beobachtung und Beeinflussung eines Steuergeräts durch ein Beeinflussungsgerät, jedoch wird die Schnittstelle anspruchsvollen Beobachtungs- und Beeinflussungsaufgaben oft nicht gerecht, weil die mit ihr realisierbaren Übertragungsraten zu gering sind.

Debug-Schnittstellen einiger Mikroprozessoren bzw. Mikrocontroller weisen neben der JTAG-Schnittstelle eine weitere Schnittstelle innerhalb der Debug-Schnittstelle auf, die über eine sogenannte Trace-Funktionalität der Debug-Schnittstelle genutzt werden kann. Hinter der Trace-Funktionalität verbirgt sich die Möglichkeit, einen ganzen Adreßbereich - denTrace-Adreßbereich - innerhalb des Adreßraums des Steuergeräts bzw. des Speichers des Steuergeräts automatisch zu überwachen. Dazu wird dem Mikrocontroller des Steuergeräts der Trace-Adreßbereich vorgegeben, wobei die Trace-Funktionalität dafür sorgt, daß jede Veränderung des Inhalts einer Adresse innerhalb des Trace-Adreßbereichs unmittelbar über die Debug-Schnittstelle angezeigt wird. Bei den beispielhaft angeführten Mikrocontrollern MPC 5553 und MPC 5554 geschieht dies über eine Schnittstelle, mit der sehr hohe Datenraten erzielbar sind, nämlich der Auxiliary Port bzw. die MDO-Pins (Message Data Out) des Auxiliary Output Ports.

Die Trace-Funktionalität wird im Stand der Technik jedoch nicht zur Beobachtung eines Steuergeräts im Sinne dieser Erfindung verwendet, da dem mit der Trace-Funktionalität ausgestatteten Mikrocontroller oft nur ein einziger Trace-Adreßbereich oder nur einige wenige Trace-Adreßbereiche vorgebbar sind. Sollen beispielsweise mit einem einzigen Trace-Adreßbereich Beobachtungsadressen überwacht werden, die in dem Adreßraum des Steuergeräts weit auseinanderliegen, so werden automatisch von der Trace-Funktionalität auch alle anderen, nicht interessierenden Adressen zwischen den Beobachtungsadressen automatisch überwacht und auch Veränderungen der Inhalte von nicht interessierenden Adressen durch die Trace-Funktionalität erfaßt und gemeldet. Diese Eigenschaft macht die Verwendung der Trace-Funktionalität zur Beobachtung eines Steuergeräts vor allem unter Echtzeitanforderungen und mit möglichst geringer Verfälschung des Laufzeitverhaltens des Steuergeräts durch die Beobachtung uninteressant.

Aufgabe der vorliegenden Erfindung ist es, die aufgezeigten Nachteile bei bekannten Verfahren zur Beobachtung eines Steuergeräts unter Verwendung der Trace-Funktionalität einer Debug-Schnittstelle - zumindest teilweise - zu vermeiden.

Die aufgezeigte Aufgabe ist erfindungsgemäß zunächst und im wesentlichen bei dem in Rede stehenden Verfahren dadurch gelöst, daß auf dem Steuergerät ein Beobachtungsdienst zur Ausführung mit dem Mikrocontroller eingerichtet wird, daß auf dem Steuergerät wenigstens ein separater Trace-Adreßbexeich innerhalb des Adreßraums mit wenigstens einer Adresse bestimmt wird, daß dem Beobachtungsdienst - insbesondere verteilte - Beobachtungsadressen innerhalb des Adreßraums mitgeteilt werden und daß der Beobachtungsdienst die Adreßinhalte - zumindest eines Teils - der Beobachtungsadressen sequentiell in wenigstens eine Adresse des Trace-Adreßbereichs kopiert.

Unter der Einrichtung eines Beobachtungsdienstes auf dem Steuergerät ist zu verstehen, daß ein zusätzliches Programm - der Beobachtungsdienst - auf dem Steuergerät von dem Mikrocontroller ausgeführt wird, und zwar zusätzlich zu dem von dem Steuergerät bzw. dem Mikrocontroller des Steuergeräts auszuführenden Programmen, durch die das Steuergerät zur Durchführung seiner originären Aufgaben befähigt wird (Messen, Steuern, Regeln).

Unter der Bestimmung eines separaten Trace-Adreßbereichs innerhalb des Adreßraums des Steuergeräts bzw. des Mikrocontrollers des Steuergeräts ist die Vorgabe eines Adreßbereichs zu verstehen, der gerade nicht die interessierenden Beobachtungsadressen umfaßt und auch nicht umfassen muß, sondern der auch lediglich nur eine einzige Adresse umfassen kann, wobei diese einzige Adresse als ein Trace-Kanal verstanden werden kann. Dem Beobachtungsdienst können nun die eigentlich interessierenden Beobachtungsadressen innerhalb des Adreßraums mitgeteilt werden, wobei die zentrale Aufgabe des Beobachtungsdienstes darin besteht, die Adreßinhalte der Beobachtungsadressen sequentiell - also zeitlich nacheinander - in die wenigstens eine Adresse des Trace-Adreßbereichs zu kopieren. Durch die Vorgabe des separten Trace-Adreßbereichs greift die vorausgesetzte Trace-Funktionalität des Steuergeräts bzw. des Mikrocontrollers des Steuergeräts automatisch ein, sobald sich der Inhalt der Adresse des Trace-Adreßbereich ändert.

Durch die erfindungsgemäße Ausgestaltung des Verfahrens und die Einrichtung eines Beobachtungsdienstes auf dem Steuergerät können mit einem Trace-Adreßbereich, der im einfachsten Fall nur eine einzige Adresse umfassen kann, beliebig viele interessierende Beobachtungsadressen innerhalb des Adreßraums des Speichers des Steuergeräts überwacht werden, wobei die Ausgabe des Adreßinhalts einer Beobachtungsadresse von der auf dem Mikrocontroller ohnehin vorhandenen Trace-Funktionalität vorgenommen wird. Eine Adresse bzw. jede Adresse innerhalb des Trace-Adreßbereichs kann somit auch als ein Trace-Kanal aufgefaßt werden, da jede Adresse innerhalb des Trace-Adreßbereichs aufgrund der Überwachung durch die vorhandene Trace-Funktionalität gleichsam wie ein Übertragungskanal für die Inhalte der Beobachtungsadressen wirkt, die in die Adresse des Trace-Adreßbereichs kopiert wird.

Das erfindungsgemäße Verfahren bietet überraschenderweise einen weiteren Vorteil gegenüber der "normalen" Verwendung der Trace-Funktionalität, die vor allem die Initialisierung der Beobachtung des Steuergeräts betrifft. Bei Verwendung der "normalen" Trace-Funktionalität bleibt der Beobachter über die ursprünglichen Inhalte der Beobachtungsadressen im unklaren, da er erstmalig Kenntnis von den Adreßinhalten der Beobachtungsadressen erhält, nachdem sie sich erstmalig verändert haben. Bei dem erfindungsgemäßen Verfahren hingegen wird durch die aktive Veränderung des Adreßinhalts einer Adresse des Trace-Adreßbereichs auch eine initiale Mitteilung der Adreßinhalte der Beobachtungsadressen erzwungen.

In einer bevorzugten Ausgestaltung des erfindungsgemäßen Verfahrens werden dem auf dem Mikrocontroller des Steuergeräts ausgeführten Beobachtungsdienst die Beobachtungsadressen innerhalb des Adreßraums von dem Beeinflussungsgerät mitgeteilt. Beeinflussungsgeräte verfügen üblicherweise über eine weitere Schnittstelle, nämlich eine Anwender-Schnittstelle, über die der Anwender das Beeinflussungsgerät konfigurieren kann und über die der Anwender auch die vom Beeinflussungsgerät erfaßten Adreßinhalte der Beobachtungsadressen innerhalb des Adreßraums des Steuergerätespeichers auslesen kann.

Eine weitere bevorzugte Ausgestaltung der Erfindung zeichnet sich dadurch aus, daß die Beobachtungsadressen der dem Beeinflussungsgerät sequentiell über die Adresse des Trace-Adreßbereichs übermittelten Adreßinhalte von dem Beeinflussungsgerät anhand der Übermittlungsreihenfolge ermittelt werden. Voraussetzung für diese Ausgestaltung der Erfindung ist, daß das Beeinflussungsgerät Kenntnis von der Reihenfolge hat, in der der Beobachtungsdienst die Adreßinhalte der Beobachtungsadressen in eine Adresse des Trace-Adreßbereichs (Trace-Kanal) kopiert. Die Reihenfolge der durch den Beobachtungsdienst über den Trace-Kanal übermittelten Adreßinhalte der Beobachtungsadressen codiert dann die Beobachtungsadresse des jeweiligen empfangenen Adreßinhalts; jedes von dem Beeinflussungsgerät empfangene Datum kann damit einer Beobachtungsadresse zugeordnet werden.

Eine weitere besonders bevorzugte Ausgestaltung der Erfindung sieht vor, daß zusätzlich zu dem Adreßinhalt einer Beobachtungsadresse auch die Beobachtungsadresse selbst in eine Adresse des Trace-Adreßbereichs kopiert wird, d. h. der Inhalt einer Beobachtungsadresse und die Beobachtungsadresse selbst werden zusammen von dem Beobachtungsdienst kopiert und von der Trace-Funktionalität an das Beeinflussungsgerät übermittelt. In einer Variante des bevorzugten Ausführungsbeispiels geschieht dies dadurch, daß der Adreßinhalt der Beobachtungsadresse und die Beobachtungsadresse selbst zu einem einzigen Datum zusammengefaßt werden, das einen entsprechend größeren Umfang hat als nur der Adreßinhalt einer Beobachtungsadresse. Zur Implementierung dieser Variante muß folglich ein übergeordnetes Protokoll vorgesehen sein, das einerseits die Zusammenfassung von Beobachtungsadresse und Inhalt der Beobachtungsadresse auf dem Steuergerät und andererseits das Separieren beider Informationen aus der einen, durch die Trace-Funktionalität übermittelten Information in Beobachtungsadresse und deren Inhalt auf dem Beeinflussungsgerät vornimmt. Dabei kann dieses übergeordnete Protokoll einfach durch eine freie Skalierbarkeit des Trace-Kanals - also der Größe der Adresse im Trace-Adreßbereich - vorgegeben sein, oder das übergeordnete Protokoll kann auch einfach dadurch realisiert werden, daß der separate Trace-Adreß-bereich zwei Adressen und damit zwei Trace-Kanäle umfaßt, wobei über den einen Trace-Kanal beispielsweise die Beobachtungsadresse und über den anderen Trace-Kanal der Inhalt der Beobachtungsadresse von der Trace-Funktionalität übermittelt werden.

In einer besonders bevorzugten Ausgestaltung des erfindungsgemäßen Verfahrens ist vorgesehen, daß dem Beeinflussungsgerät über wenigstens eine Adresse des Trace-Adreßbereichs wenigstens eine Steueranweisung zur Steuerung des Beeinflussungsgeräts übermittelt wird, wobei die Steueranweisung durch den Wert des übermittelten Datums codiert wird. Durch diese Eigenschaft ist es beispielsweise auf sehr einfache Weise möglich, daß der Beobachtungsdienst Einfluß auf das Beeinflussungsgerät ausübt und zum Beispiel das Beeinflussungsgerät mit dem Beobachtungsvorgang auf dem Steuergerät synchronisiert. Nach einer besonders vorteilhaften Weiterentwicklung dieser Ausgestaltung des Verfahrens ist vorgesehen, daß eine Steueranweisung dem Beeinflussungsgerät den Start und/oder das Ende der Übertragung des Adreßinhalts wenigstens einer Beobachtungsadresse anzeigt, wobei die Steueranweisung bevorzugt den Start und/oder das Ende der Übertragung sequentiell übermittelter Adreßinhalte mehrerer Beobachtungsadressen anzeigt. Dadurch ist auf sehr einfache Art und Weise gewährleistet, daß bei einem kontinuierlichen Datenstrom von Adreßinhalten der Beobachtungsadressen von dem Steuergerät zu dem Beeinflussungsgerät, von dem Beeinflussungsgerät in eindeutiger Weise der Start und/oder das Ende eines Beobachtungszyklus erkennbar ist, womit die Gefahr ausgeräumt ist, daß eine einmal "außer Tritt geratene" Zuordnung von übermittelten Adreßinhalten von Beobachtungsadressen zu den Beobachtungsadressen im Beeinflussungsgerät fehlerhaft fortgesetzt wird.

Das erfindungsgemäße Verfahren bietet darüber hinaus die Möglichkeit der Überwachung der Adreßinhalte der Beobachtungsadressen in einem festen Zeitraster, was mit der konventionellen Anwendung der Trace-Funktionalität nicht möglich ist, denn die konventionelle Trace-Funktionalität der Debug-Schnittstelle ist ereignisgetrieben. Bei einem bevorzugten Ausführungsbeispiel des erfindungsgemäßen Verfahrens ist daher vorgesehen, daß der Beobachtungsdienst die Adreßinhalte der Beobachtungsadressen in einem festen Zeitraster sequentiell in wenigstens eine Adresse des Trace-Adreßbereichs kopiert.

Genauso ist es jedoch zusätzlich oder alternativ in einem weiteren bevorzugten Ausführungsbeispiel des Verfahrens möglich, daß der Beobachtungsdienst auf Anforderung des Beeinflussungsgeräts die Adreßinhalte der Beobachtungsadressen in die Adresse - den Trace-Kanal - kopiert, woraufhin die vorhandene Trace-Funktionalität dafür sorgt, daß die in die Adresse im Trace-Adreßbereich kopierten Daten durch die von der Trace-Funktionalität genutzten Debug-Schnittstelle bzw. durch den von der Trace-Funktionalität genutzten Teil der Debug-Schnittstelle verfügbar gemacht wird.

In einem weiteren bevorzugten Ausführungsbeispiel des erfindungsgemäßen Verfahrens kopiert der Beobachtungsdienst die Adreßinhalte von Beobachtungsadressen, die von unterschiedlichen, auf dem Steuergerät ausgeführten Tasks verwendet werden, in unterschiedliche Adressen bzw. Trace-Kanäle des Trace-Adreßbereichs. Dabei ist es egal, ob eine Task im hier verwendeten Kontext einen Prozeß oder einen Thread darstellt, vielmehr sollen Tasks hier als unterscheidbare programmtechnische Vorgänge aufgefaßt werden. Dabei können sich Tasks beispielsweise dadurch unterscheiden, daß sie mit einer unterschiedlichen Abtastrate berechnet werden. Durch die beschriebene Ausgestaltung des erfindungsgemäßen Verfahrens ist es auf einfache Weise möglich, die Adreßinhalte der interessierenden Beobachtungsadressen innerhalb verschiedener Tasks separat und gut unterscheidbar voneinander zu beobachten.

Im einzelnen gibt es nun eine Vielzahl von Möglichkeiten, das erfindungsgemäße Verfahren auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: ein aus dem Stand der Technik bekanntes Beobachtungssystem, bestehend aus einem Steuergerät und einem Beeinflussungsgerät, die miteinander verbunden sind,
- Fig. 2: eine schematische Darstellung des Speichers des Steuergeräts mit interessierenden Beobachtungsadressen und der Anordnung von Trace-Adreßbereichen nach einem aus dem Stand der Technik bekannten Beobachtungsverfahren,
- Fig. 3: eine schematische Darstellung des Speichers des Steuergeräts und die erfindungsgemäße Anwendung eines separaten Trace-Adreßbereichs zur Beobachtung des Steuergeräts und
- Fig. 4: eine weitere schematische Darstellung des Speichers des Steuergeräts mit einem weiteren Ausführungsbeispiel der erfindungsgemäßen Verwendung eines separaten Trace-Adreßbereichs.

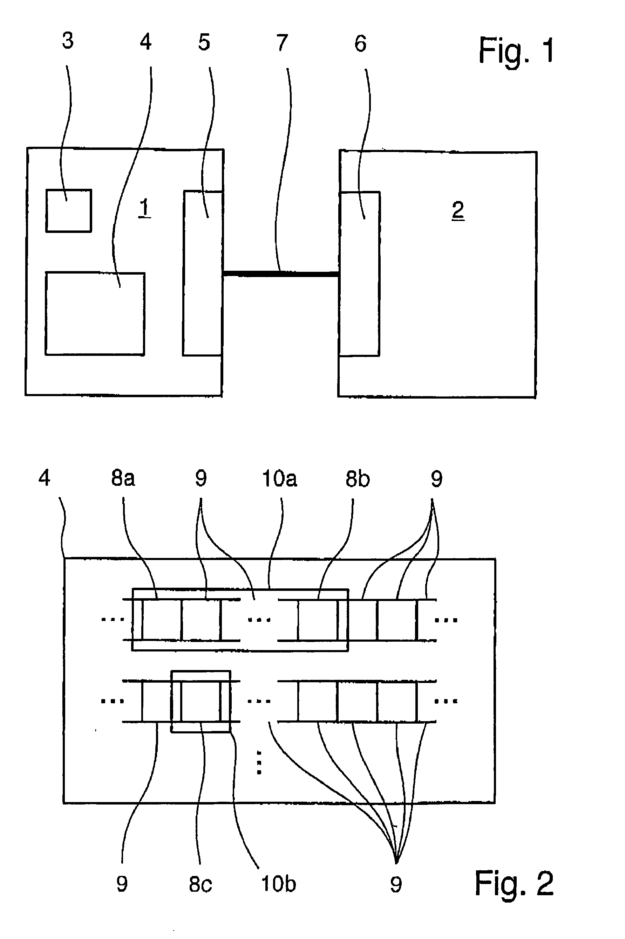

Fig. 1 zeigt die gerätetechnischen Voraussetzungen zur Durchführung des erfindungsgemäßen Verfahrens zur Beobachtung eines Steuergeräts 1 durch ein Beeinflussungsgerät 2, wobei das Steuergerät 1 wenigstens einen Mikrocontroller 3, wenigstens einen Speicher 4 und wenigstens eine Debug-Schnittstelle 5 umfaßt. Das Beeinflussungsgerät 2 weist ebenfalls eine Debug-Schnittstelle 6 auf, die mit der Debug-Schnittstelle 5 des Steuergeräts 1 korrespondiert. Das Steuergerät 1 und das Beeinflussungsgerät 2 sind durch eine geeignete Verbindung 7 über die Debug-Schnittstelle 5 des Steuergeräts 1 und die Debug-Schnittstelle 6 des Beeinflussungsgeräts 2 miteinander verbunden. Die Verbindung 7 zwischen dem Steuergerät 1 und dem Beeinflussungsgerät 2 besteht im Regelfall aus einer Vielzahl von verschiedenen elektrischen Verbindungsleitungen, was abhängig ist von dem Typ der Debug-Schnittstelle 5 des Steuergeräts 1 und der Debug-Schnittstelle 6 des Beeinflussungsgeräts 2.

In dem dargestellten Ausführungsbeispiel gemäß Fig. 1 ist die Debug-Schnittstelle 5 von dem Mikrocontroller 3 umfaßt, auch wenn die Debug-Schnittstelle 5 und der Mikrocontroller 3 des Steuergeräts 1 getrennt voneinander dargestellt sind. Vorliegend handelt es sich bei dem Mikrocontroller 3 um einen beliebigen Mikrocontroller aus der Familie MPC 55xx der Freescale Semiconductor Inc., deren Debug-Schnittstelle 5 auf dem Nexus-Standard beruht.

Die Debug-Schnittstelle 5 des Steuergeräts 1 und die Debug-Schnittstelle 6 des Beeinflussungsgeräts 2 sind jeweils mit einer Trace-Funktionalität zur Überwachung von Beobachtungsadressen 8a, 8b, 8c ausgestattet, die in den Fig. 2, 3 und 4 dargestellt sind.

Fig. 2 zeigt die konventionelle Verwendung der Trace-Funktionalität zur Nachverfolgung von sich ändernden Adreßinhalten, bei der in Kauf genommen werden muß, daß nicht nur interessierende Beobachtungsadressen 8a, 8b, 8c von der Trace-Funktionalität erfaßt werden, sondern auch Adreßinhalte nicht interessierender Adressen 9, Dies liegt bei im Stand der Technik bekannten Trace-Funktionalitäten von Debug-Schnittstellen 5, 6 daran, daß nur ein Trace-Adreßbereich oder nur einige wenige Trace-Adreßbereiche 10a, 10b vorgegeben werden können. Wenn unter diesen Voraussetzungen eine Vielzahl von interessierenden Beobachtungsadressen 8a, 8b, 8c mit der Trace-Funktionalität überwacht werden sollen und die Beobachtungsadressen 8a, 8b, 8c verteilt - also nicht zusammenhängend - im Adreßraum des Speichers 4 des Steuergeräts 1 liegen, so muß der eine Trace-Adreßbereich 10, bzw. die einigen wenigen Trace-Adreßbereiche 10a, 10b so groß gewählt werden, daß sie alle interessierenden Beobachtungsadressen 8a, 8b, 8c umfassen. Das bedeutet jedoch, daß häufig eine Vielzahl von nicht interessierenden Adressen 9 von den ausgewählten Trace-Adreßbereichen 10a, 10b mitumfaßt sind, Die Trace-Funktionalität reagiert auf Veränderungen der Adreßinhalte der nicht interessierenden Adressen 9 genauso wie auf die Veränderungen von Adreßinhalten der interessierenden Beobachtungsadressen 8a, 8b, 8c. Aus diesem Grund wird bei der in Fig. 2 dargestellten konventionellen Verwendung der Trace-Funktionalität häufig ein überwiegender Teil von Adressen überwacht, die nicht zu den Beobachtungsadressen 8a, 8b, 8c gehören, d. h. der Nutzungsgrad der Trace-Funktionalität ist unter Umständen sehr gering.

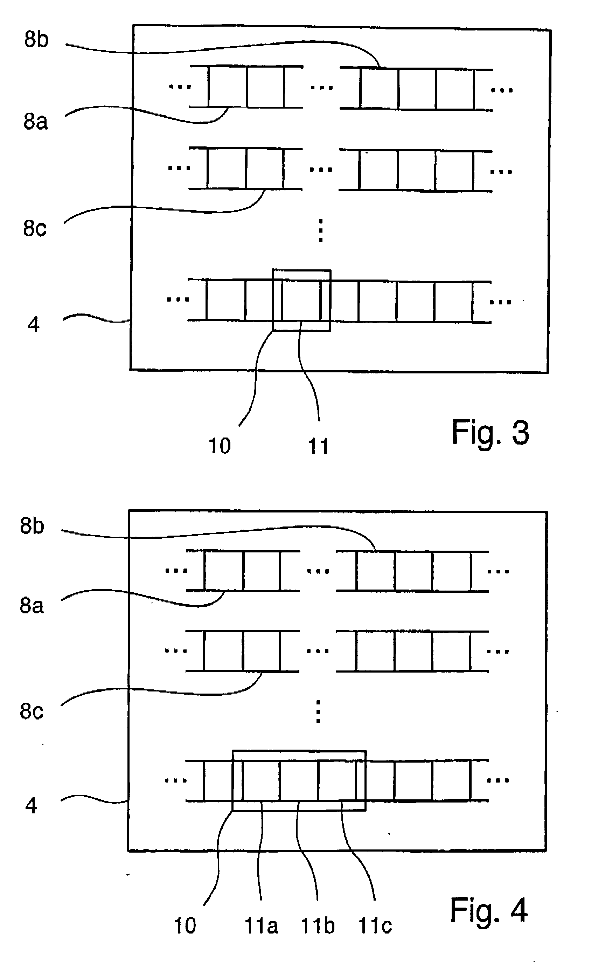

Bei dem in den Fig. 3 und 4 teilweise dargestellten erfindungsgemäßen Verfahren wird auf dem Steuergerät 1 ein nicht dargestellter Beobachtungsdienst zur Ausführung mit dem Mikrocontroller 3 eingerichtet, und auf dem Steuergerät 1 wird wenigstens ein separater Trace-Adreßbereich 10 innerhalb des Adreßraums des Speichers 4 mit wenigstens einer Adresse 11 bestimmt und dem Beobachtungsdienst werden - insbesondere verteilte - Beobachtungsadressen 8a, 8b, 8c innerhalb des Adreßraums des Speichers 4 des Steuergeräts 1 mitgeteilt, wobei der Beobachtungsdienst die Adreßinhalte der Beobachtungsadressen 8a, 8b, 8c - oder auch nur eines Teils der Beobachtungsadressen 8a, 8b, 8c - sequentiell in wenigstens eine Adresse 11 des Trace-Adreßbereichs 10 kopiert.

Durch das Einrichten eines separaten Trace-Adreßbereichs 10, also eines Trace-Adreßbereichs 10, der in einem unbenutzten Bereich des Adreßraums liegt, und durch das Kopieren der Adreßinhalte ausschließlich der interessierenden Beobachtungsadressen 8a, 8b, 8c in eine Adresse 11 - oder aber in mehrere Adressen 11a, 11b, 11c - des separaten Trace-Adreßbereichs 10 wird erreicht, daß die Trace-Funktionalität nur auf die interessierenden Beobachtungsadressen 8a, 8b, 8c indirekt angewendet wird.

In den in den Fig. 3 und 4 schematisch dargestellten Ausführungsbeispielen des erfindungsgemäßen Verfahrens werden dem Beobachtungsdienst - also einer zusätzlich auf dem Steuergerät 1 ausgeführte Software - die Beobachtungsadressen 8a, 8b, 8c innerhalb des Adreßraums des Speichers 4 vom Beeinflussungsgerät 2 mitgeteilt, und zwar über die Debug-Schnittstelle 6 des Beeinflussungsgeräts 2, die Debug-Schnittstelle 5 des Steuergeräts 1 und die Verbindung 7 zwischen beiden Debug-Schnittstellen 5, 6. Dadurch lassen sich ganz flexibel unterschiedliche Beobachtungsadressen 8a, 8b, 8c mit dem erfindungsgemäßen Verfahren auf dem Steuergerät 1 beobachten. Auch ist es möglich, zur Laufzeit einer Anwendung auf dem Steuergerät 1 bzw. während der Ausführung einer Anwendung - oder mehrerer Anwendungen - durch den Mikrocontroller 3 des Steuergeräts 1, die Beobachtungsadressen 8a, 8b, 8c zu wechseln, wodurch eine besondere Flexibilität erreicht wird.

Das in den Fig, 3 und 4 dargestellte Verfahren, das auf dem Kopieren der Adreßinhalte - insbesondere verteilter - Beobachtungsadressen 8a, 8b, 8c in eine Adresse 11 des Trace-Adreßbereichs 10 beruht, werden die Adreßinhalte der Beobachtungsadressen 8a, 8b, 8c sequentiell, also zeitlich nacheinander an das Beeinflussungsgerät 2 übermittelt. Eine strenge sequentielle Übermittlung ist jedenfalls dann gegeben, wenn nur eine einzige Adresse 11 des Trace-Adreßbereichs 10 als Trace-Kanal verwendet wird, da der Beobachtungsdienst selbstverständlich immer nur einen Adreßinhalt einer Beobachtungsadresse 8 in die Adresse 11 des Trace-Adreßbereichs 10 kopieren kann. Dies wird in den Ausführungsbeispielen gemäß der Fig. 3 und 4 dahingehend ausgenutzt, als daß die Beobachtungsadressen 8a, 8b, 8c der dem Beeinflussungsgerät 2 sequentiell über die Adresse 11 des Trace-Adreßbereichs 10 übermittelten Adreßinhalte vom Beeinflussungsgerät 2 anhand der Übermittlungsreihenfolge ermittelt werden. Dazu ist erforderlich, daß dem Beeinflussungsgerät 2 bekannt ist, in welcher Reihenfolge die Adreßinhalte der interessierenden Beobachtungsadressen 8a, 8b, 8c von dem Beobachtungsdienst in die Adresse 11 des Trace-Adreßbereichs 10 kopiert werden bzw. in welcher Reihenfolge die Adreßinhalte der interessierenden Beobachtungsadressen 8a, 8b, 8c von der Trace-Funktionalität über die Debug-Schnittstellen 5, 6 zu dem Beeinflussungsgerät 2 übermittelt werden.

In einem anderen, nicht dargestellten, Ausführungsbeispiel wird zusätzlich zu dem Adreßinhalt einer Beobachtungsadresse 8a, 8b, 8c auch die Beobachtungsadresse 8a, 8b, 8c selbst in eine Adresse 11 des Trace-Adreßbereichs 10 kopiert und damit von der Trace-Funktionalität über die Debug-Schnittstelle 5 dem Beeinflussungsgerät 2 verfügbar gemacht.

In dem Ausführungsbeispiel gemäß Fig. 4 werden dem Beeinflussungsgerät 2 über die Adresse 11c des Trace-Adreßbereichs 10 Steueranweisungen zur Steuerung des Beeinflussungsgeräts 2 übermittelt, wobei die Steueranweisung durch den Wert des übermittelten Datums codiert wird. Dadurch ist es auf einfache Weise möglich, daß das Steuergerät 1 bzw. der Beobachtungsdienst das Beeinflussungsgerät 2 beeinflußt. In dem Ausführungsbeispiel gemäß Fig. 4 wird diese Technik dazu verwendet, um dem Beeinflussungsgerät 2 den Start und das Ende der Übertragung des Adreßinhalts wenigstens einer Beobachtungsadresse 8 durch eine Steueranweisung anzuzeigen. Die Steueranweisung, die den Start der Übertragung des Adreßinhalts einer Beobachtungsadresse 8 oder mehrerer Beobachtungsadressen 8a, 8b, 8c anzeigt, wird im dargestellten Ausführungsbeispiel dazu verwendet, eine korrekte Zuordnung der übermittelten Adreßinhalte zu den korrespondierenden Beobachtungsadressen 8a, 8b, 8c auf dem Beeinflussungsgerät 2 vorzunehmen.

Das erfindungsgemäße Verfahren zur Beobachtung eines Steuergeräts 1 auf der Basis einer abgewandelten Trace-Funktionalität gestattet es, Beobachtungen des Steuergeräts 1 durchzuführen, die mit der konventionellen Trace-Funktionalität nicht durchführbar sind. Beispielsweise ist es möglich, die Trace-Funktionalität von dem "normalen" ereignisgetriebenen Modus in einen zeitgetriebenen Modus zu überführen, indem die Inhalte der Beobachtungsadressen 8a, 8b, 8c in einem festen Zeitraster sequentiell in wenigstens eine Adresse 11 des Trace-Adreßbereichs 10 kopiert werden.

In den Ausführungsbeispielen nach den Fig. 3 und 4 werden zur Initialisierung des Beobachtungsvorgangs des Steuergeräts 1 von dem Beobachtungsdienst anfänglich einmal alle Adreßinhalte der Beobachtungsadressen 8a, 8b, 8c in eine Adresse 11 des Trace-Adreßbezeichs 10 kopiert. Dies hat zur Folge, daß das Beeinflussungsgerät 2 auch Kenntnis von den ursprünglichen Adreßinhalten der Beobachtungsadressen 8a, 8b, 8c erhält; dies ist unter Anwendung der konventionellen Trace-Funktionalität nicht möglich.

In dem Ausführungsbeispiel gemäß Fig. 4 kopiert der Beobachtungsdienst die Adreßinhalte von Beobachtungsadressen 8a, 8b, 8c, die von unterschiedlichen auf dem Steuergerät 1 ausgeführten Tasks verwendet werden, in die beiden verschiedenen Adressen 11a, 11b des Trace-Adreßbereichs 10. Die von einer ersten Task veränderten Beobachtungsadressen 8a, 8b und die von einer zweiten Task benutzte Beobachtungsadresse 8c können dadurch getrennt voneinander beobachtet werden, daß die unterschiedlichen Tracc-Kanäle 11a, 11b des Trace-Adreßbereichs 10 zur Übermittlung der Adreßinhalte der von den verschiedenen Tasks benutzten Adressen verwendet werden.

## Patentansprüche

1. Verfahren zur Beobachtung eines Steuergeräts (1) durch ein Beeinflussungsgerät (2), wobei das Steuergerät (1) wenigstens einen Mikrocontroller (3), wenigstens einen Speicher (4) und wenigstens eine Debug-Schnittstelle (5) umfaßt, der Speicher (4) Adreßinhalte in Adressen innerhalb seines Adreßraums aufweist und die Debug-Schnittstelle (5) mit einer Trace-Funktionalität zur Überwachung von Beobachtungsadressen (8a, 8b, 8c) innerhalb wenigstens eines Trace-Adreßbereichs (10) innerhalb des Adreßraums ausgestattet ist,
**dadurch gekennzeichnet,**
**daß** auf dem Steuergerät (1) ein Beobachtungsdienst zur Ausführung mit dem Mikrocontroller (3) eingerichtet wird, daß auf dem Steuergerät (1) wenigstens ein separater Trace-Adreßbereich (10) innerhalb des Adreßraums mit wenigstens einer Adresse (11, Trace-Kanal) bestimmt wird, daß dem Beobachtungsdienst - insbesondere verteilte - Beobachtungsadressen (8a, 8b, 8c) innerhalb des Adreßraums mitgeteilt werden und daß der Beobachtungsdienst die Adreßinhalte - zumindest eines Teils - der Beobachtungsadressen (8a, 8b, 8c) sequentiell in wenigstens eine Adresse (11, Trace-Kanal) des Trace-Adreßbereichs (10) kopiert.

2. Verfahren nach Anspruch 1, **dadurch gekennzeichnet, daß** dem Beobachtungsdienst die Beobachtungsadressen (8a, 8b, 8c) innerhalb des Adreßraums vom Beeinflussungsgerät (2) mitgeteilt werden.

3. Verfahren nach Anspruch 1 oder 2, **dadurch gekennzeichnet, daß** die Beobachtungsadressen (8a, 8b, 8c) der dem Beeinflussungsgerät (2) sequentiell über die Adresse (11, Trace-Kanal) des Trace-Adreßbereichs (10) übermittelten Adreßinhalte von dem Beeinflussungsgerät (2) anhand der Übermittlungsreihenfolge ermittelt werden.

4. Verfahren nach Anspruch 1 oder 2, **dadurch gekennzeichnet, daß** zusätzlich zu dem Adreßinhalt einer Beobachtungsadresse (8a, 8b, 8c) auch die Beobachtungsadresse (8a, 8b, 8c) selbst in eine Adresse (11, Trace-Kanal) des Trace-Adreßbereichs (10) kopiert wird.

5. Verfahren nach einem der Ansprüche 1 bis 4, **dadurch gekennzeichnet, daß** dem Beeinflussungsgerät (2) über wenigstens eine Adresse (11, Trace-Kanal) des Trace-Adreßbereichs (10) wenigstens eine Steueranweisung zur Steuerung des Beeinflussungsgeräts (2) übermittelt wird, wobei die Steueranweisung durch den Wert des übermittelten Datums kodiert wird.

6. Verfahren nach Anspruch 5, **dadurch gekennzeichnet, daß** eine Steueranweisung dem Beeinflussungsgerät (2) den Start und/oder das Ende der Übertragung des Adreßinhalts wenigstens einer Beobachtungsadresse (8) anzeigt, wobei die Steueranweisung bevorzugt den Start und/oder das Ende der Übertragung sequentiell übermittelter Adreßinhalte mehrerer Beobachtungsadressen (8a, 8b, 8c) anzeigt.

7. Verfahren nach einem der Ansprüche 1 bis 6, **dadurch gekennzeichnet, daß** der Beobachtungsdienst die Adreßinhalte der Beobachtungsadressen (8a, 8b, 8c) in einem festen Zeitraster sequentiell in wenigstens eine Adresse (11, Trace-Kanal) des Trace-Adreßbereichs (10) kopiert.

8. Verfahren nach einem der Ansprüche 1 bis 7, **dadurch gekennzeichnet, daß** der Beobachtungsdienst auf Anforderung des Beeinflussungsgeräts (2) hin die Adreßinhalte der Beobachtungsadressen (8a, 8b, 8c) sequentiell in wenigstens eine Adresse (11, Trace-Kanal) des Trace-Adreßbereichs (10) kopiert.

9. Verfahren nach einem der Ansprüche 1 bis 7, **dadurch gekennzeichnet, daß** der Beobachtungsdienst die Adreßinhalte von Beobachtungsadressen (8a, 8b, 8c), die von unterschiedlichen auf dem Steuergerät (1) ausgeführten Tasks verwendet werden, in unterschiedliche Adressen (11, Trace-Kanäle) des Trace-Adreßbereichs (10) kopiert.
